# EUROPEAN PATENT SPECIFICATION

(11) **EP 4 000 325 B1**
(45) Date of publication and mention of the grant of the patent: **23.10.2024**
(21) Application number: 20849059.9
(22) Date of filing: 06.08.2020
(51) Int. Cl.: H04W 68/02, H04W 88/08

(54) **METHOD AND APPARATUS FOR HANDLING PAGING PROCEDURE IN WIRELESS COMMUNICATION SYSTEM**
VERFAHREN UND VORRICHTUNG ZUR HANDHABUNG EINES FUNKRUFVERFAHRENS IN EINEM DRAHTLOSKOMMUNIKATIONSSYSTEM
PROCÉDÉ ET APPAREIL DE GESTION DE PROCÉDURE DE RADIOMESSAGERIE DANS UN SYSTÈME DE COMMUNICATION SANS FIL

(30) Priority: 07.08.2019 IN 201941032057; 21.07.2020 IN 201941032057
(43) Date of publication of application: 25.05.2022
(73) Proprietor: Samsung Electronics Co., Ltd., Suwon-si, Gyeonggi-do 16677 (KR)
(72) Inventor: TIWARI, Kundan, Suwon-si, Gyeonggi-do 16677 (KR); KUMAR, Lalith, Suwon-si, Gyeonggi-do 16677 (KR); INGALE, Mangesh Abhimanyu, Suwon-si, Gyeonggi-do 16677 (KR)
(74) Representative: Gulde & Partner
(86) International application number: PCT/KR2020/010435
(87) International publication number: WO 2021/025503

(56) References cited:
- EP-A1- 3 419 351
- WO-A1-2011/100652
- WO-A1-2016/099138
- US-A1- 2012 039 265
- US-A1- 2019 116 631
- US-A1- 2019 230 625
- "3rd Generation Partnership Project; Technical Specification Group Services and System Aspects; System Architecture for the 5G System; Stage 2 (Release 16)", vol. SA WG2, 11 July 2019 (2019-07-11), XP051756434, Retrieved from the Internet <URL:http://www.3gpp.org/ftp/tsg_sa/WG2_Arch/Latest_SA2_Specs/DRAFT_INTERIM/DRAFT_23501-g20_CRs_Implemented.zip> [retrieved on 20190711]
- ANONYMOUS: "3rd Generation Partnership Project; Technical Specification Group Core Network and Terminals; Non-Access-Stratum (NAS) protocol for 5G System (5GS); Stage 3 (Release 16)", 3GPP STANDARD; TECHNICAL SPECIFICATION; 3GPP TS 24.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V16.1.0, 14 June 2019 (2019-06-14), pages 1 - 541, XP051754142
- "3rd Generation Partnership Project; Technical Specification Group Core Network and Terminals; Non-Access-Stratum (NAS) functions related to Mobile Station (MS) in idle mode (Release 16)", 3GPP STANDARD; TECHNICAL SPECIFICATION; 3GPP TS 23.122, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V16.2.0, 14 June 2019 (2019-06-14), pages 1 - 72, XP051754110
- ZTE: "Consideration on support CAG in NR", 3GPP DRAFT; R3-190262 CONSIDERATION ON CAG SUPPORT FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20190225 - 20190301, 15 February 2019 (2019-02-15), Mobile Competence Centre ; 650, route des Lucioles ; F-06921 Sophia-Antipolis Cedex ; France, pages 1 - 4, XP051604205
- OPPO: "Introducing support for Non-Public Networks and operations on Allowed CAG list", 3GPP DRAFT; S2-1901613-CR-23501-ADDITIONS-TO-S2-1901391-ON-CAG-LIST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Tenerife (Spain); 20190225 - 20190301, 18 February 2019 (2019-02-18), Mobile Competence Centre ; 650, route des Lucioles ; F-06921 Sophia-Antipolis Cedex ; France, XP051610217
- HUAWEI, CMCC, SAMSUNG: "(TP for NPN BL CR for TS 38.413): Paging for NPN", 3GPP DRAFT; R3-197053, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Reno, Nevada, US; 20191118 - 20191122, 9 November 2019 (2019-11-09), Mobile Competence Centre ; 650, route des Lucioles ; F-06921 Sophia-Antipolis Cedex ; France, XP051824024

## Description

### [Technical Field]

The present disclosure relates to a wireless communication system, and more specifically related to a method and Next-Generation Radio Access Network (NG-RAN) for handling a paging procedure in the wireless communication system using a Closed Access Group (CAG) configuration.

### [Background Art]

To meet the demand due to ever-increasing wireless data traffic after the commercialization of the 4th generation (4G) communication system, there have been efforts to develop an advanced 5th generation (5G) system or pre-5G communication system. For this reason, the 5G or pre-5G communication system is also called a beyond 4th-generation (4G) network communication system or post long term evolution (LTE) system. Implementation of the 5G communication system using ultra-frequency millimeter wave (mmWave) bands, e.g., 60 giga hertz (GHz) bands, is considered to attain higher data transfer rates. To reduce propagation loss of radio waves and increase a transmission range in the ultra-frequency bands, beamforming, massive multiple-input multiple-output (MIMO), Full Dimensional MIMO (FD-MIMO), array antenna, analog beamforming, and large-scale antenna techniques are under discussion. To improve system networks, technologies for advanced small cells, cloud Radio Access Networks (RANs), ultra-dense networks, device to device (D2D) communication, wireless backhaul, moving networks, cooperative communication, Coordinated Multi-Points (CoMP), reception-end interference cancellation and the like are also being developed in the 5G communication system. In addition, in the 5G system, an advanced coding modulation (ACM), e.g., hybrid frequency-shift keying (FSK) and quadrature amplitude modulation (QAM) (FQAM), sliding window superposition coding (SWSC), and an advanced access technology, e.g., filter bank multi carrier (FBMC), non-orthogonal multiple access (NOMA), and sparse code multiple access (SCMA), are being developed.

In the meantime, the Internet is evolving from a human-centered connectivity network where humans generate and consume information into an Internet of Things (IoT) network where distributed entities such as things transmit, receive and process information without human intervention. Internet of Everything (IoE) technologies combined with IoT, such as big data processing technologies through connection with a cloud server, for example, have also emerged. To implement IoT, various technologies, such as a sensing technology, a wired/wireless communication and network infrastructure, a service interfacing technology, and a security technology are required, and recently, even technologies for sensor network, Machine to Machine (M2M), Machine Type Communication (MTC) for connection between things are being studied. Such an IoT environment may provide intelligent Internet Technology (IT) services that generate a new value to human life by collecting and analyzing data generated among connected things. IoT may be applied to a variety of areas, such as smart homes, smart buildings, smart cities, smart cars or connected cars, smart grids, health care, smart home appliances and advanced medical services through convergence and combination between existing Information Technologies (IT) and various industrial applications.

In this regard, various attempts to apply the 5G communication system to the IoT network are being made. For example, technologies regarding a sensor network, M2M, MTC, etc., are implemented by the 5G communication technologies, such as beamforming, MIMO, array antenna schemes, etc. Even application of a cloud Radio Access Network (cloud RAN) as the aforementioned big data processing technology may be viewed as an example of convergence of 5G and IoT technologies.

Document (US2019/116631) discloses a conventional method of receiving a paging message from the AMF by the base station and subsequently performing the paging of the terminal.

### [Disclosure of Invention]

### [Solution to Problem]

The present disclosure relates to a method and an apparatus for paging a terminal in a cell, which is identified based on a paging message transmitted from an Access and Mobility Management Function (AMF) server.

The present invention is defined by the appended set of claims.

According to an aspect of the present invention, a method for a base station in a wireless communication system is provided as defined by the appended claims.

According to another aspect of the present invention, a base station in a wireless communication system is provided as defined by the appended claims.

### [Brief Description of Drawings]

This method and wireless communication system are illustrated in the accompanying drawings, throughout which like reference letters indicate corresponding parts in the various figures. The embodiments herein will be better understood from the following description with reference to the drawings, in which:
FIG. 1A illustrates an overview of a wireless communication system for a paging procedure, according to an embodiment as disclosed herein;
FIG. 1B illustrates various hardware components of an AMF server for the paging procedure in the wireless communication system, according to an embodiment as disclosed herein;
FIG. 1C illustrates various hardware components of a NG-RAN system for the paging procedure in the wireless communication system, according to an embodiment as disclosed herein;
FIG. 1D illustrates various hardware components of the UE for the paging procedure in the wireless communication system, according to an embodiment as disclosed herein;
FIG. 2 illustrates a flow chart illustrating step by step operations, implemented by the AMF server, for the paging procedure in the wireless communication system, according to an embodiment as disclosed herein;
FIG. 3 illustrates a flow chart illustrating step by step operations, implemented by the NG-RAN system, for the paging procedure in the wireless communication system, according to a claimed embodiment as disclosed herein;
FIG. 4 illustrates an example sequential flow diagram illustrating the paging procedure in a private network when the UE is configured with CAG only UE, according to a claimed embodiment as disclosed herein;
FIG. 5 illustrates an example sequential flow diagram illustrating the paging procedure in the private network when the UE has CAG subscription, according to a claimed embodiment as disclosed herein;
FIG. 6 illustrates an example sequential flow diagram illustrating the paging procedure in the private network when the UE does not have the CAG subscription, according to an embodiment as disclosed herein;
FIG. 7 illustrates an example sequential flow diagram illustrating the paging procedure in a network with S-NSSAI as assistance information, according to an embodiment as disclosed herein;
FIG. 8 illustrates an example sequential flow diagram illustrating the paging procedure in the private network, according to an embodiment as disclosed herein; and
FIG. 9 illustrates an example sequential flow diagram illustrating a handover procedure in the private network, according to an embodiment as disclosed herein.

### [Mode for Invention]

Before undertaking the Mode for Invention, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

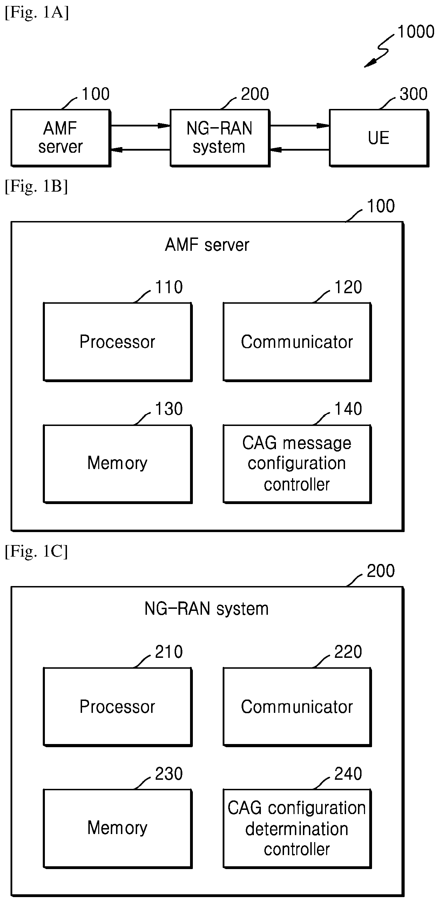

FIGS. 1A through 9, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits, or the like, and may optionally be driven by firmware and software. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the invention. Likewise, the blocks of the embodiments may be physically combined into more complex blocks without departing from the scope of the invention

The accompanying drawings are used to help easily understand various technical features and it should be understood that the embodiments presented herein are not limited by the accompanying drawings. As such, the present disclosure should be construed to extend to any alterations, equivalents, and substitutes in addition to those which are particularly set out in the accompanying drawings. Although the terms first, second, etc. may be used herein to describe various elements, these elements should not be limited by these terms. These terms are generally only used to distinguish one element from another.

The following acronyms are used in the patent disclosure:
3GPP TS 3rd Generation Partnership Project Technical Specification (TS)
5GC 5G Core Network
5GS 5G System
5G-AN5G Access Network
AMF Access and Mobility Management Function
AS Access Stratum
CAG Closed Access Group
CP Control Plane
DL Downlink
DRX Discontinuous Reception
NF Network Function
NGAP Next Generation Application Protocol
NPN Non-Public Network
NR New Radio
NSSAINetwork Slice Selection Assistance Information
PDU Protocol Data Unit
PLMN Public Land Mobile Network
(R)AN (Radio) Access Network
SNPN Stand-alone Non-Public Network
S-NSSAI Single Network Slice Selection Assistance Information
UE User Equipment

According to a 3rd Generation Partnership Project (3GPP) Technical Specification (TS) 23.501 and 24.501, a private network can be integrated into a Public Land Mobile Network (PLMN). In a heterogeneous network deployment scenario, a registration area of the PLMN can consist of cell(s) of a private network(s) and cell(s) of a public network. In the heterogeneous network, there can be a User Equipment (UE) which is configured to camp only on private network cells or there can be a UE which is configured to camp on a cell of a public network only (i.e. UE which does not have any subscription for the private network) or the UE which can camp on both private network and non-private network. In the heterogeneous network deployment scenario, how the private network will page a particular UE is not defined. In an example, if the private network pages to all cells of a registration area then the private network will waste paging resources as the chance of the UE to present in a particular cell is very low (e.g. the UE configured to camp on the private network cell only cannot camp on a cell of public PLMN).

According to the 3GPP TS 23.501 and 24.501, supporting CAG feature by the UE is not a mandatory feature i.e. some UEs may support the CAG feature and some UEs may not support the CAG feature. Currently, the UE does not indicate if the UE supports the CAG feature or not. In the absence of support of the CAG feature of the UE in the private network, the private network does not know how to perform the paging procedure and handover procedure for the UE.

Thus, it is desired to address the above mentioned disadvantages or other shortcomings or at least provide a useful alternative.

The principal object of the embodiments herein is to handle a paging procedure in a wireless communication system by determining whether a CAG configuration indicates that a UE is configured to access only a CAG cell or not. This results in reducing a paging resource wastage.

Accordingly, embodiments herein disclose a method for a paging procedure in a wireless communication system. The method includes receiving, by a Next-Generation Radio Access Network (NG-RAN) system, a Next Generation Application Protocol (NGAP) message comprising a CAG configuration from an Access and Mobility Management Function (AMF) server. Further, the method includes determining, by the NG-RAN system, whether the CAG configuration indicates that a UE is configured to access only CAG cell or not. Further, the method includes performing, by the NG-RAN system, one of sending a paging message to the UE only on the CAG cell in response to determining that the UE is configured to access only the CAG cell, and sending a paging message to the UE on both the CAG cell and a non-CAG cell in response to determining that the UE is not configured to access only the CAG cell.

In an embodiment, the CAG configuration includes a Public Network Integrated in Non-Public Network (PNI-NPN) restricted information indicating whether the CAG configuration indicates that the UE is configured to access only CAG cell or not.

Accordingly, embodiments herein disclose a method for a paging procedure in a wireless communication system. The method includes configuring, by an AMF server, a NGAP message comprising a CAG configuration. The CAG configuration indicates that a UE is configured to access only CAG cell or not. Further, the method includes sending, by the AMF server, the NGAP message comprising the CAG configuration to an NG-RAN system.

Accordingly, embodiments herein disclose an NG-RAN system for a paging procedure in a wireless communication system. The NG-RAN includes a processor coupled with a memory. The processor is configured to receive a NGAP message comprising a CAG configuration from an AMF server. Further, the processor is configured to determine whether the CAG configuration indicates that a UE is configured to access only CAG cell or not. Further, the processor is configured to perform one of send a paging message to the UE only on the CAG cell in response to determining that the UE is configured to access only the CAG cell, and send a paging message to the UE on both the CAG cell and a non-CAG cell in response to determining that the UE is not configured to access only the CAG cell.

Accordingly, embodiments herein disclose an AMF server for a paging procedure in a wireless communication system. The AMF server includes a processor coupled with a memory. The processor configures a NGAP message comprising a CAG configuration. The CAG configuration indicates that a UE is configured to access only CAG cell or not. Further, the processor sends the NGAP message comprising the CAG configuration to a NG-RAN system.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein, and the embodiments herein include all such modifications. Accordingly, embodiments herein disclose a method for a paging procedure in a wireless communication system. The method includes receiving, by a NG-RAN system, a NGAP message comprising a CAG configuration from an AMF server. Further, the method includes determining, by the NG-RAN system, whether the CAG configuration indicates that a UE is configured to access only CAG cell or not. Further, the method includes performing, by the NG-RAN system, one of sending a paging message to the UE only on the CAG cell in response to determining that the UE is configured to access only the CAG cell, and sending a paging message to the UE on both the CAG cell and a non-CAG cell in response to determining that the UE is not configured to access only the CAG cell.

The various embodiments of the proposed method are adopted in the 3GPP TS 38.413.

Unlike conventional methods and systems, when an AMF server initiates paging procedure to a UE when the UE is in a 5GS mobility management (5GMM) IDLE mode (i.e. the UE has no N1 signaling connection), then the AMF server sends a UE private network-related subscriptions (e.g. CAG identity or CAG identities of the CAG(s) to which the UE is subscribed to, the UE is configured as CAG only) to the NG-RAN system during a paging procedure (e.g. PAGING message). The NG-RAN uses the UE's private network-related subscription information to select CAG cell(s) for which the UE has a subscription. The NG-RAN pages in the selected cell(s) to the UE. This results in reducing s paging resource wastage.

In other words, when the AMF server requires to page the UE which is configured to access a 5G system (5GS) by only CAG cells then the AMF server sends to the NG-RAN the subscription parameter indicating that the UE can access the 5GS via only subscribed CAG cell(s). The NG-RAN system will page the UE to only the subscribed CAG cells and not in the non-CAG cell(s).

In another words, the AMF server sends PNI-NPN restricted information in the paging message. The paging message indicates to the NG-RAN system whether the UE can access public cells (i.e. non-CAG cells). If the network indicates that the UE cannot access the public cell then the NG-RAN system sends paging in CAG cell only not in the public cell otherwise the NG-RAN system will page in both private cell (CAG cells) and public cells (non-CAG cells). In another words, if the NPN paging assistance information IE is included in the assistance data for Paging IE, the NG-RAN system may take it into account when determining the cells where paging will be performed.

The method can be used for the paging procedure in a private network or even when a private network is integrated to the public network.

Referring now to the drawings, and more particularly to FIGS. 1A through 9, there are shown preferred embodiments.

FIG. 1A illustrates an overview of a wireless communication system 1000 for handling a paging procedure, according to an embodiment as disclosed herein. The wireless communication system 1000 includes an AMF server 100, a NG-RAN system 200 and a UE 300. The UE 300 can be, for example, but not limited to a cellular phone, a smart phone, a Personal Digital Assistant (PDA), a tablet computer, a laptop computer, an Internet of Things (IoT), a virtual reality device, a flexible electronic device, and a foldable electronic device.

The AMF server 100 configures a NGAP message comprising a CAG configuration. The CAG configuration includes a PNI-NPN restricted information indicating whether the CAG configuration indicates that the UE 300 is configured to access only CAG cell or not. The CAG configuration indicates that the UE 300 is configured to access only CAG cell or not. Further, the AMF server 100 sends the NGAP message comprising the CAG configuration to the NG-RAN system 200.

The NG-RAN system 200 receives the NGAP message comprising the CAG configuration from the AMF server 100. Further, the NG-RAN system 200 determines whether the CAG configuration indicates that the UE 300 is configured to access only CAG cell or not. If the UE 300 is configured to access only the CAG cell then, the NG-RAN system 200 sends a paging message to the UE 300 only on the CAG cell. Else, the UE 300 is not configured to access only the CAG cell then, the NG-RAN system 200 sends the paging message to the UE (300) on both the CAG cell and a non-CAG cell. In an embodiment of the present disclosure, the NG-RAN system 200 may comprise an electronic device which may transmit or receive signals to or from a UE. For example, the electronic device may be at least one of a gNode B (gNB), an eNB, a Node B, a base station, a radio access unit, a base station controller (BSC), or a network node. Obviously, the disclosure is not limited thereto.

Table 1 indicts a format of the NGAP message and the NGAP message format is sent by the AMF server 100 and is used to page the UE 300 in one or several tracking areas.

**Table 1**

| IE/Group Name | Presence | Range | IE type and reference | Semantics description | Criticality | Assigned Criticality |
|---|---|---|---|---|---|---|
| Message Type | M | | 3GPP9.3.1.1 | | YES | ignore |
| UE Paging Identity | M | | 3GPP 9.3.3.18 | | YES | ignore |
| Paging DRX | O | | 3GPP 9.3.1.90 | | YES | ignore |
| TAI List for Paging | | *1* | | | YES | ignore |
| TAI List for Paging Item | | *1* <*maxn oofTAIf orPagin g*> | | | -- | |
| >>TAI | M | | 3GPP 9.3.3.11 | | -- | |
| Paging Priority | O | | 3GPP 9.3.1.78 | | YES | ignore |
| UE Radio Capability for Paging | O | | 3GPP 9.3.1.68 | | YES | ignore |
| Paging Origin | O | | 3GPP 9.3.3.22 | | YES | ignore |
| Assistance Data for Paging | O | | 3GPP 9.3.1.69 | | YES | ignore |

Table 2 indicates an assistance data for the paging in the NGAP message. The IE provides assistance information for paging optimisation.

**Table 2**

| IE/Group Name | Presence | Range | IE type and reference | Semantics description | Criticality | Assigned Criticality |
|---|---|---|---|---|---|---|
| Assistance Data for Recommend ed Cells | O | | 3GPP 9.3.1.70 | | -- | |
| Paging Attempt Information | O | | 3GPP 9.3.1.72 | | -- | |
| NPN Paging Assistance Information | O | | 3GPP 9.3.1.P1 | | YES | ignore |

Table 3 indicates NPN Paging Assistance Information in the assistance data for the paging. The IE contains NPN Paging Assistance Information.

**Table 3**

| IE/Group Name | Presence | Range | IE type and reference | Semantics description |
|---|---|---|---|---|
| CHOICE NPN Mobility Information | O | | | |
| >PNI-NPN Information | | | | |
| >>CAG List for NPN Paging Assistance | | | Allowed PNI-NPN List 3GPP 9.3.3.P2 | |

Table 4 and Table 5 indicate an allowed PNI-NPN List: The IE contains information on allowed UE mobility in PNI-NPN including allowed PNI-NPNs and whether the UE is allowed to access PLMN cells for each PLMN.

**Table 4**

| IE/Group Name | Presence | Range | IE type and reference | Semantics description |
|---|---|---|---|---|
| Allowed PNI-NPN List | | 1 | | |
| >PLMN PNI-NPN Item | | *1.*<*maxn oofEPLM Ns*+*1*> | | |
| >>PLMN Identity | M | | 3GPP 9.3.3.5 | |
| >>PNI-NPN restricted | | | ENUMERA TED(restrict ed, not-restricted, ...) | If set to "restricted", indicates that the UE may not access public (non-CAG) cells for this PLMN. |
| >>CAG list per PLMN | | *1* | | |
| >>>CAG Item | | *1.<maxn oofCACs perPLM N*> | | |
| >>>>CAG ID | | | 3GPP 9.3.3.B | |

**Table 5**

| Range bound | Explanation |
|---|---|
| maxnoofEPLMNs+1 | Maximum no. of equivalent PLMNs plus one serving PLMN. Value is 16. |
| maxnoofCAGsperPLMN | Maximum number of CAGs per PLMN in UE's Allowed PNI-NPN list. Value is FFS. |

FIG. 1B illustrates various hardware components of the AMF server 100 for the paging procedure in the wireless communication system 1000, according to an embodiment as disclosed herein. The AMF server 100 includes a processor 110, a communicator 120, a memory 130, and a CAG message configuration controller 140. The processor 110 is coupled with the communicator 120, the memory 130, and the CAG message configuration controller 140. The CAG message configuration controller 140 configures the NGAP message comprising the CAG configuration that indicates that the UE 300 is configured to access only CAG cell or not. Further, the CAG message configuration controller 140 sends the NGAP message comprising the CAG configuration to the NG-RAN system 200.

The processor 110 is configured to execute instructions stored in the memory 130 and to perform various processes. The communicator 120 is configured for communicating internally between internal hardware components and with external devices via one or more networks.

The memory 130 also stores instructions to be executed by the processor 110. The memory 130 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 130 may, in some examples, be considered a non-transitory storage medium. The term "non-transitory" may indicate that the storage medium is not embodied in a carrier wave or a propagated signal. However, the term "non-transitory" should not be interpreted that the memory 130 is non-movable. In some examples, the memory 130 can be configured to store larger amounts of information than the memory. In certain examples, a non-transitory storage medium may store data that can, over time, change (e.g., in Random Access Memory (RAM) or cache).

Although the FIG. 1B shows various hardware components of the AMF server 100 but it is to be understood that other embodiments are not limited thereon. In other embodiments, the AMF server 100 may include less or more number of components. Further, the labels or names of the components are used only for illustrative purpose and does not limit the scope of the invention. One or more components can be combined together to perform same or substantially similar function to handle the paging procedure in the wireless communication system 1000.

FIG. 1C illustrates various hardware components of the NG-RAN system 200 for handling the paging procedure in the wireless communication system 1000, according to an embodiment as disclosed herein. The NG-RAN system 200 includes a processor 210, a communicator 220, a memory 230, and a CAG configuration determination controller 240. The processor 210 is coupled with the communicator 220, the memory 230, and the CAG configuration determination controller 240.

The CAG configuration determination controller 240 receives the NGAP message comprising the CAG configuration from the AMF server 100. Further, the CAG configuration determination controller 240 is configured to determine whether the CAG configuration indicates that the UE 300 is configured to access only CAG cell or not. If the UE 300 is configured to access only the CAG cell then, the CAG configuration determination controller 240 sends the paging message to the UE 300 only on the CAG cell. Else, the UE 300 is not configured to access only the CAG cell then, the CAG configuration determination controller 240 is configured to send the paging message to the UE 300 on both the CAG cell and a non-CAG cell.

The processor 210 is configured to execute instructions stored in the memory 230 and to perform various processes. The communicator 220 is configured for communicating internally between internal hardware components and with external devices via one or more networks.

The memory 230 also stores instructions to be executed by the processor 210. The memory 230 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 230 may, in some examples, be considered a non-transitory storage medium. The term "non-transitory" may indicate that the storage medium is not embodied in a carrier wave or a propagated signal. However, the term "non-transitory" should not be interpreted that the memory 230 is non-movable. In some examples, the memory 230 can be configured to store larger amounts of information than the memory. In certain examples, a non-transitory storage medium may store data that can, over time, change (e.g., in Random Access Memory (RAM) or cache).

Although the FIG. 1C shows various hardware components of the NG-RAN system 200 but it is to be understood that other embodiments are not limited thereon. In other embodiments, the NG-RAN system 200 may include less or more number of components. Further, the labels or names of the components are used only for illustrative purpose and does not limit the scope of the invention. One or more components can be combined together to perform same or substantially similar function to handle the paging procedure in the wireless communication system 1000.

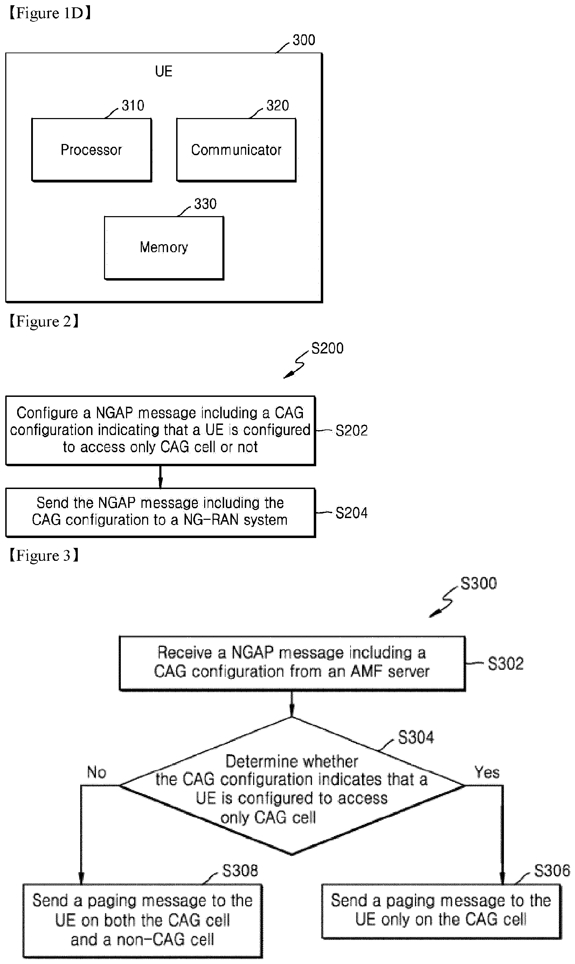

FIG. 1D illustrates various hardware components of the UE 300, according to an embodiment as disclosed herein, according to an embodiment as disclosed herein. The UE 300 includes a processor 310, a communicator 320, and a memory 330. The processor 310 is coupled with the communicator 320 and the memory 330. The processor 310 is configured to execute instructions stored in the memory 330 and to perform various processes. The communicator 320 is configured for communicating internally between internal hardware components and with external devices via one or more networks.

The memory 330 also stores instructions to be executed by the processor 310. The memory 330 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 330 may, in some examples, be considered a non-transitory storage medium. The term "non-transitory" may indicate that the storage medium is not embodied in a carrier wave or a propagated signal. However, the term "non-transitory" should not be interpreted that the memory 330 is non-movable. In some examples, the memory 330 can be configured to store larger amounts of information than the memory. In certain examples, a non-transitory storage medium may store data that can, over time, change (e.g., in Random Access Memory (RAM) or cache).

Although the FIG. 1D shows various hardware components of the UE 300 but it is to be understood that other embodiments are not limited thereon. In other embodiments, the UE 300 may include less or more number of components. Further, the labels or names of the components are used only for illustrative purpose and does not limit the scope of the invention. One or more components can be combined together to perform same or substantially similar function to handle the paging procedure in the wireless communication system 1000.

FIG. 2 illustrates a flow chart (S200) illustrating step by step operations, implemented by the AMF server 100, for the paging procedure in the wireless communication system 1000, according to an embodiment as disclosed herein. The operations (S202 and S204) are performed by the processor 110.

At S202, the method includes configuring the NGAP message comprising the CAG configuration. The CAG configuration indicates that the UE 300 is configured to access only CAG cell or not. At S204, the method includes sending the NGAP message comprising the CAG configuration to the NG-RAN system 200.

FIG. 3 illustrates a flow chart (S300) illustrating step by step operations, implemented by the NG-RAN system 200, for the paging procedure in the wireless communication system 1000, according to a claimed m embodiment as disclosed herein. The operations (S302-S308) are performed by the processor 210.

At S302, the method includes receiving the NGAP message comprising the CAG configuration from the AMF server 100. At S304, the method includes determining whether the CAG configuration indicates that the UE 300 is configured to access only CAG cell or not. If the UE 300 is configured to access only the CAG cell then, at S306, the method includes sending the paging message to the UE (300) only on the CAG cell. If the UE 300 is not configured to access only the CAG cell then, at S308, the method includes sending the paging message to the UE 300 on both the CAG cell and the non-CAG cell

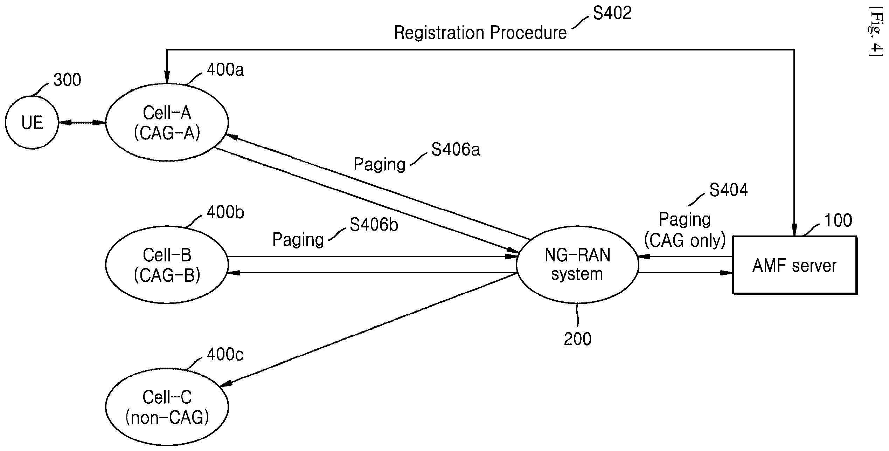

FIG. 4 illustrates an example sequential flow diagram illustrating the paging procedure in a private network when the UE 300 is configured with CAG only UE (400a and 400b), according to a claimed embodiment as disclosed herein. At S402, the UE 300 is configured as the CAG only. The UE 300 is registered to the network and assigned a registration area. The registration area consists of CAG cell(s) and non-CAG cell(s). The UE 300 is in the 5GMM-IDLE mode. At S404, the AMF server 100 initiates the paging procedure to the UE (300). The AMF server 100 sends the NGAP message (e.g. PAGING Message) containing the UE CAG configuration that the UE 300 is "CAG only" to initiate paging procedure in the NG-RAN system 200. At S406a, the NG-RAN system 200 pages in the CAG cell(s) only (400a and 400b). At S406b, the NG-RAN system 200 does not page to the non-CAG cell 400c.

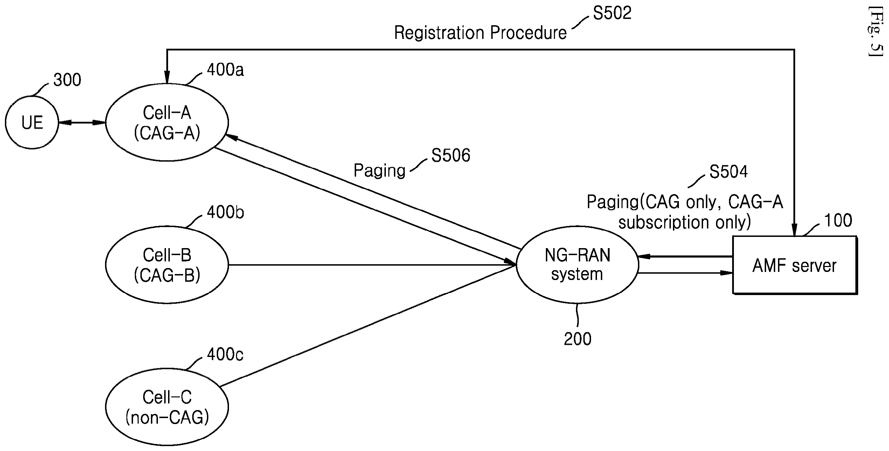

FIG. 5 illustrates another example sequential flow diagram illustrating the paging procedure in the private network when the UE 300 has CAG subscription, according to a claimed embodiment as disclosed herein.

At S502, The UE 300 has the CAG subscription for a first CAG (e.g. CAG-A) 400a, and the UE 300 is configured as the CAG only. The UE 300 is registered to the network and assigned to the registration area. The registration area consists of CAG cell(s) (e.g. a cell-A 400a and a second CAG cell (Cell-B) belonging to a second CAG (CAG-B) 400b and non-CAG cell(s) 400c. The UE 300 is in the 5GMM-IDLE mode.

At S504, the AMF server 100 initiates the paging procedure to the UE 300. The AMF server 100 sends the NGAP message initiating paging procedure (e.g. PAGING message) to the NG-RAN system 200 containing the UE CAG subscription that the UE 300 is "CAG only" and subscription information of the first CAG (CAG-A).

At 506, the NG-RAN system 200 pages in cell(s) belonging to the first CAG (CAG-A) 400a of the registration area. The network does not page to the non-CAG cell 400c and CAG cell(s) belonging to the other CAG in the registration area.

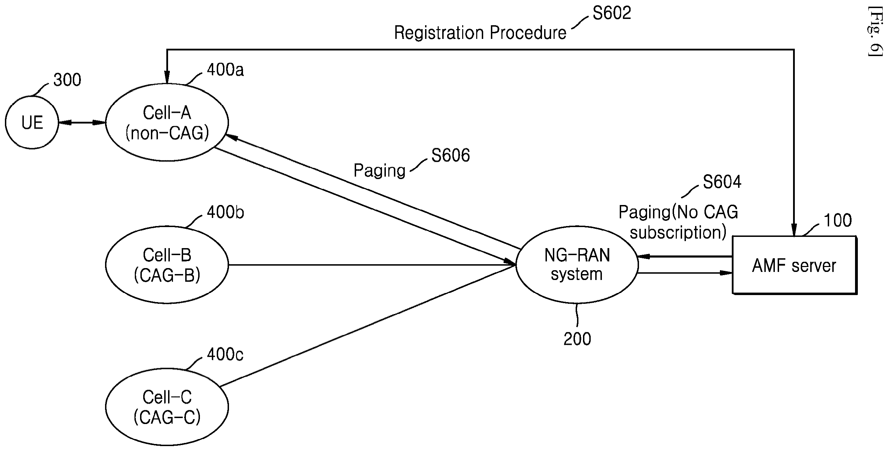

FIG. 6 illustrates an example sequential flow diagram illustrating the paging procedure in a private network when the UE 300 does not have the CAG subscription, according to an embodiment as disclosed herein. At 602, the UE 300 does not have any CAG subscription. The UE (300) is registered to the network and assigned a registration area. The registration area consists of CAG cell(s) (400a and 400b) and the non-CAG cell(s) 400c. The UE 300 is in the 5GMM-IDLE mode.

At 604, the AMF server 100 initiates a paging procedure to the UE (300). The AMF server 100 sends the NGAP message (e.g. PAGING Message) without containing any UE's CAG subscription-related information. Alternatively, the AMF server 100 indicates to the NG-RAN system 200 in the NGAP message that the UE 300 does not have any CAG subscription. At 606, the AMF server 100 pages in the non-CAG cell(s) only 400a. The network does not page to a CAG cell.

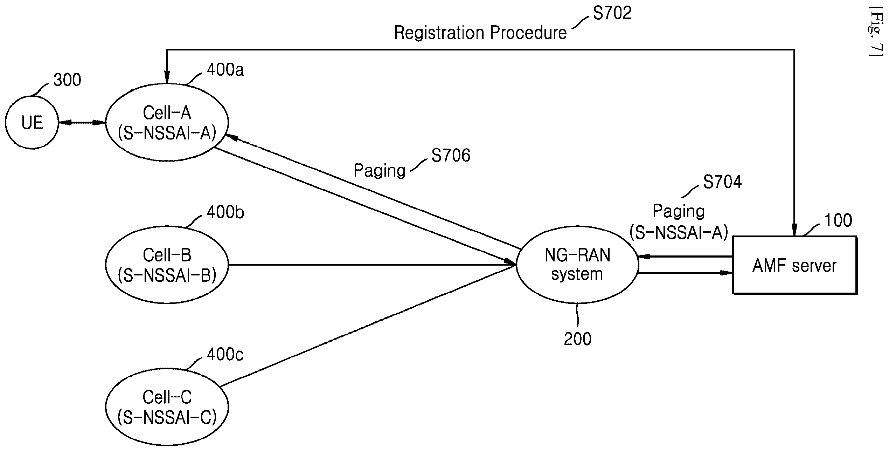

FIG. 7 illustrates an example sequential flow diagram illustrating the paging procedure in a network with S-NSSAI as assistance information, according to an embodiment as disclosed herein. At S702, the UE 300 is registered to the network and assigned the registration area. The registration area consists of at least two cells, one cell providing service(s) related to a first network slice only (S-NSSAI-A) and another cell providing service(s) related to a second network slice (S-NSSAI-B) only. The UE 300 has a subscription of the first network slice and the UE 300 only camps on a cell belonging to the first network slice. The UE 300 is in the 5GMM-IDLE mode.

At S704, the AMF server 100 initiates the paging procedure to the UE 300. The AMF server 100 sends the NGAP message (e.g. PAGING) containing the first network slice to the NG-RAN system 200 to initiate a paging procedure. At S706, the NG-RAN system 200 pages in the cell(s) belonging to the first network slice only to the UE 300. The network does not page in cell(s) belonging to the second network slice.

In an embodiment, the procedure defined in the FIG. 4 is also applicable for the case of DNN, where a registration area consists of at least two cells. One cell handling services related to a first DNN and the second cell handling services related to the second DNN and the UE 300 has subscription of only one DNN (.e.g. the first DNN). In this scenario, the cell broadcasts the DNN it supports. The UE 300 camps on the cell which supports a DNN and the UE 300 is configured to initiate service related to the DNN. The UE 300 initiates the establishment of a PDU session related to a DNN in a cell if the cell broadcasts that it supports the DNN. In this scenario, the AMF server 100 initiates paging procedure related to the DNN for which the UE 300 has established a PDU session or related to the subscribed DNN of the UE 300 i.e. the AMF server 100 sends the paging message containing the UE subscribed DNN or the DNN for which the UE 300 has established the PDU session. The NG-RAN system 200 will page the UE 300 in cell(s) supporting the subscribed DNN or the DNN for which the UE 300 has established the PDU session.

In another embodiment, for all the above embodiments, the 5GC or the AMF server 100 determines CAG cell(s) to which the UE 300 has a subscription and send Cell Global Identity (CGI) of these CAG cell(s) to the NG-RAN system 200. In one example, the information is sent in the Assistance Data for Recommended Cells IE of the Paging message. The NG-RAN system 200 on receiving the CGI list of CAG cell(s) in the PAGING message initiates paging to the corresponding CAG cell(s). If the Paging message also contains information the UE 300 is subscribed as CAG only then the NG-RAN system 200 shall not page to any non-CAG cell otherwise the NG-RAN shall page to the listed CAG Cell and may page to a non-CAG cell(s).

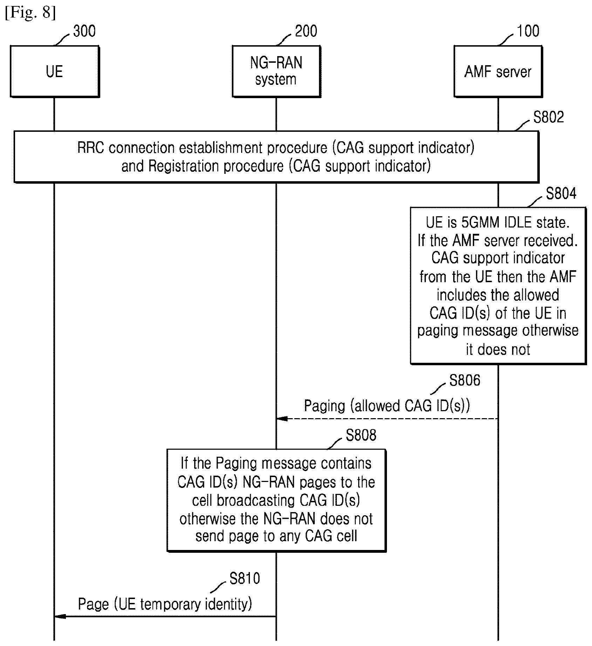

FIG. 8 illustrates an example sequential flow diagram illustrating the paging procedure in the private network, according to an embodiment as disclosed herein. S802, the UE 300 supporting the CAG feature is initially registered to the private network. During the registration procedure, the UE 300 sends a CAG support indicator whether the UE 300 supports of CAG feature or not to the private network at least in one of the following procedure or a message.

In an RRC message (e.g. RRCSetupRequest or RRCSetupComplete) during an RRC connection establishment procedure.

In a NAS message (Registration Request or Registration Complete) during a registration procedure.

In the NGAP message to the 5GC when received from the UE 300 in the RRC message.

In one example, a first NG-RAN system stores the CAG support indicator. When a second NG-RAN system fetches the UE context from the first NG-RAN system (e.g. as part of suspend resume procedure) then the first NG-RAN sends the CAG support indicator to the second NG-RAN system. The first NG-RAN system uses the CAG support indicator to execute the CAG related procedure at the second NG-RAN system.

In another example the UE 300 sends the CAG support indicator to the NG-RAN in the RRCResumeRequest or RRCResumeComplete during the suspend and resume function when the UE 300 has moved to 5GMM-CONNECTED mode with RRC inactive indication or during suspend and resume procedure when the UE 300 is moved to the 5GMM-IDLE mode with suspend indication. In RRCReestablishmentRequest and RRCReestablishmentComplete during the RRC Reestablishment procedure. In the case of NR, the CAG support indicator is sent in corresponding RRC message.

In another example, the CAG support indicator is also transmitted from a source NG-RAN to a target NG-RAN during the Xn based inter NG-RAN handover procedure.

At S804, when the AMF server 100 determines to send paging message to the UE 300, the AMF server 100 may determine if the UE 300 supports the CAG feature or not based on the received CAG support indication from the UE 300. At S806, if the UE 300 supports the CAG feature then the AMF server 100 may include the UE Allowed CAG list to the source NG-RAN and optionally the 5GC sends the CAG support indicator to the source NG-RAN.

At S808 and S810, the source NG-RAN determines if the UE 300 supports the CAG feature if the source NG-RAN receives a non-empty Allowed CAG ID list or the CAG Support indicator or both. When the source NG-RAN determines that the UE 300 supports CAG feature then it sends paging message to the CAG cell(s) broadcasting CAG ID present in the UE Allowed CAG list. When the source NG-RAN determines that the UE 300 does not support the CAG feature, then the NG-RAN does not page in any CAG cell.

In one example, the steps S802-S806 are also applicable for the case when the UE 300 is already initial registered.

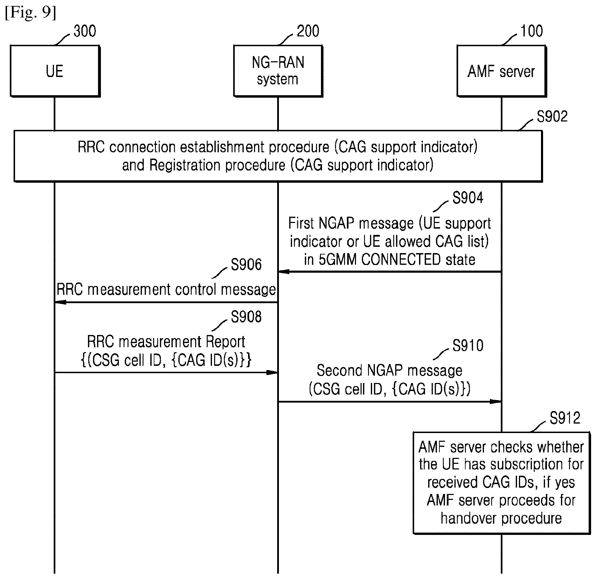

FIG. 9 illustrates an example sequential flow diagram illustrating a handover procedure in the private network, according to an embodiment as disclosed herein.

At 902, the UE 300 supporting the CAG feature is initially registered to the private network. During the registration procedure, the UE 300 sends the CAG support indicator whether the UE 300 supports the CAG feature or not to the private network at least in one of the following procedure or message:

In the RRC message (e.g. RRCSetupRequest or RRCSetupComplete) during RRC connection establishment procedure.

In the NAS message (Registration Request or Registration Complete) during the Registration procedure.

In the NGAP message to the 5GC when received from the UE in an RRC message.

At S904, the UE 300 is in the 5GMM CONNECTED state, the AMF server 100 sends to the NG-RAN system 200 the UE CAG support indicator or the UE CAG subscription (i.e. Allowed CAG list) in a first NGAP message (e.g. in an existing NGAP message or a new NGAP message).

At S906, based on the UE CAG subscription information or the UE CAG support indicator, the NG-RAN system 200 sends a first RRC message (e.g. RRC measurement control message) containing information about the CAG cell(s) to be measured and reported to the UE (300) during the RRC measurement report procedure.

At S908, in response of receiving the first RRC message, the UE 300 measures the CAG cell(s) and sends a second RRC message (e.g. RRC measurement report) containing information about measured CAG cell(s). For each measured CAG cell, the UE 300 sends one of the following info to the NG-RAN system 200 in the second RRC message.

All CAG identities broadcasted in the CAG cell. In this case, the UE 300 will indicate for each CAG identity whether the UE 300 is a member of the CAG ID (i.e. has a subscription or not for CAG ID). In one example if the UE 300 does not indicate member information then the NG-RAN system 200 determines the UE 300 is not a member of the CAG ID. The reported CAG information consists as described below,

### List {CAG Cell ID, List {CAG Identity, member} }

Only the CAG identities which are in the UE Allowed CAG list of the UE 300 (the list has been provided to the UE 300). The reported CAG information consists as described below,

### List {CAG Cell ID, List {CAG Identity}}.

In one example, the UE 300 sends only one CAG ID which is present in the allowed CAG List.

At S910, the NG-RAN system 200 selects the CAG Cell among the reported list of CAG cell(s), sends an existing NGAP message (e.g. Handover required) or a new NGAP message requesting AMF server 100 to perform handover procedure to the selected CAG cell including one of the following list of information to the AMF server 100.
CAG Cell ID, List {CAG Identity, member}. The List of {CAG identity, member} is the list reported for the CAG Cell ID in sub-step S902 of step S908.
CAG Cell ID, List {CAG Identity}. The list {CAG identity} is the list reported for the CAG Cell ID in sub-step ii of step S908.

At S912, the AMF server 100 checks if the UE 300 has a subscription for the received CAG ID(s). When the AMF server 100 determines that the UE 300 has a subscription for any one of received CAG ID(s), then the AMF server 100 proceeds for the handover procedure to the CAG cell, otherwise the AMF server 100 sends an existing NGAP message (e.g. Handover Failure) or a new NGAP message to the NG-RAN system 200 indicating that the UE 300 is not subscribed to the CAG identity. In one example, the CAG cell broadcasts more than one CAG ID then the NG-RAN system 200 may send the RRC message requesting the UE 300 to send another CAG ID if another CAG ID is in the UE allowed CAG List and the CAG cell broadcasts this CAG ID. The UE 300 on the receiving the RRC message sends another RRC message containing another CAG ID if another CAG ID is in the UE allowed CAG list and is broadcasted in the CAG cell. Otherwise, the UE 300 may send the RRC message indicating the UE 300 is not a member of any broadcasting CAG ID(s). On receiving the RRC message NG-RAN system 200 forwards the CAG Cell ID and received CAG ID to the AMF server 100. The AMF server 100 may again determine if the UE 300 is member of the received CAG ID. If the UE 300 is member of the received CAG ID then the AMF server 100 proceeds with the handover procedure. If the NG-RAN system 200 receives the RRC message indicating that the UE (300) does not have any broadcasted CAG ID in the allowed CAG list then the NG-RAN system 200 skips the handover procedure the reported CAG cell.

In embodiment, FIGS. 4-7 and FIG. 9 are also applicable for the case when the UE 300 is in SGMM CONNECTED mode with RRC_INACTIVE indication. The embodiment 4 also applicable for the case of CIoT case (CP Optimization or user plane optimization). In this case the S-NSSAI is replaced with either CP CIoT Optimization or User plane CIoT optimization or attach without PDN connection. This applies to both for EPS system and 5GS.

The following definitions apply to all the above embodiments:

5GLAN Group: A set of UEs using private communication for 5G LAN-type service.

5G Access Network: An access network comprising an NG-RAN and/or non-3GPP AN connecting to a 5G Core Network.

5G Core Network: The core network specified in the present document. It connects to a 5G Access Network.

5G LAN-Type Service: A service over the 5G system offering private communication using IP and/or non-IP type communications.

5G LAN-Virtual Network: A virtual network over the 5G system capable of supporting 5G LAN-type service.

5G System: 3GPP system consisting of 5G Access Network (AN), 5G Core Network and UE.

Allowed NSSAI: NSSAI provided by the Serving PLMN during e.g. a Registration procedure, indicating the S-NSSAIs values the UE could use in the Serving PLMN for the current Registration Area.

Configured NSSAI: NSSAI provisioned in the UE applicable to one or more PLMNs.

SNPN enabled UE: A UE configured to use stand-alone Non-Public Networks.

SNPN access mode: A UE operating in SNPN access mode only selects stand-alone Non-Public Networks over Uu.
Stand-alone Non-Public Network: A non-public network not relying on network functions (NF) provided by a PLMN
Subscribed S-NSSAI: S-NSSAI based on subscriber information, which a UE is subscribed to use in a PLMN

CAG only UE: a UE which is indicate by the network to access the 5GS by a CAG cell.

CAG Cell: The CAG cell shall broadcast information such that only UEs supporting CAG are accessing the cell.

Non-CAG cell: cell of a public PLMN. Normal cell where the UE can access public PLMN service.

Allowed CAG list: An Allowed CAG list of a UE is a list of CAG Identifiers the UE is allowed to access.

According to an embodiment of the present disclosure, a method for a base station in a wireless communication system is provided. The method may comprise: receiving, from an Access and Mobility Management Function (AMF) server, a paging message including information associated with an access of a terminal to a Closed Access Group (CAG) cell; and paging the terminal in a cell, which is identified based on the received paging message.

In an embodiment, the information associated with the access of the terminal to the CAG cell may comprise one of first information indicating that the terminal is restricted to access the CAG cell or second information indicating that the terminal is not restricted to access the CAG cell.

In an embodiment, the cell may be identified as the CAG cell in case that the information comprises the first information.

In an embodiment, the paging of the terminal in the identified cell may comprise paging the terminal in the CAG cell in case that the cell is identified as the CAG cell.

In an embodiment, the cell may be identified as at least one of the CAG cell or a non-CAG cell in case that the information comprises the second information.

In an embodiment, the paging of the terminal in the identified cell may comprise paging the terminal in at least one of the CAG cell or the non-CAG cell in case that the cell is identified as the at least one of the CAG cell or the non-CAG cell.

According to an embodiment of the present disclosure, a base station in a wireless communication system is provided. The base station may comprise: a transceiver; and at least one processor configured to: receive, via the transceiver, a paging message including information associated with an access of a terminal to a Closed Access Group (CAG) cell from an Access and Mobility Management Function (AMF) server; and page the terminal in a cell, which is identified based on the received paging message.

In an embodiment, the information associated with the access of the terminal to the CAG cell may comprise one of first information indicating that the terminal is restricted to access the CAG cell or second information indicating that the terminal is not restricted to access the CAG cell.

In an embodiment, the at least one processor may identify the cell as the CAG cell in case that the information comprises the first information.

In an embodiment, the at least one processor may page the terminal in the CAG cell in case that the cell is identified as the CAG cell.

In an embodiment, the at least one processor may identify the cell as at least one of the CAG cell or a non-CAG cell in case that the information comprises the second information.

In an embodiment, the at least one processor may identify the cell as at least one of the CAG cell or a non-CAG cell in case that the information comprises the second information.

The embodiments disclosed herein can be implemented using at least one software program running on at least one hardware device and performing network management functions to control the elements.

The various actions, acts, blocks, steps, or the like in the flow charts (S200 and S300) may be performed in the order presented, in a different order or simultaneously. Further, in some embodiments, some of the actions, acts, blocks, steps, or the like may be omitted, added, modified, skipped, or the like without departing from the scope of the invention.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

Although the present disclosure has been described with various embodiments, various changes and modifications may be suggested to one skilled in the art. It is intended that the present disclosure encompass such changes and modifications as fall within the scope of the appended claims.

## Claims

1. A method for a base station in a wireless communication system, the method comprising:
receiving (S302), from an access and mobility management function, AMF, entity, a paging message for a terminal;
identifying (S304) that the paging message includes information indicating whether the terminal is allowed to access non-closed access group, CAG, cells, wherein the information comprises one from among first information indicating that the terminal is not allowed to access the non-CAG cells and second information indicating that the terminal is allowed to access the non-CAG cells;
when the information comprises the first information, identifying, from among at least one CAG cell and at least one non-CAG cell, at least one cell where a paging of the terminal is to be performed as the at least one CAG cell; and
performing (S306) the paging of the terminal in the identified at least one CAG cell.

2. The method of claim 1, further comprising:
identifying, when the information comprises the second information, the at least one cell as the at least one CAG cell or the at least one non-CAG cell.

3. The method of claim 2, further comprising:
performing (S308) the paging of the terminal in the identified at least one CAG cell or the at least one non-CAG cell.

4. A base station (200) in a wireless communication system, the base station comprising:
a transceiver (220); and
at least one processor (210, 240) configured to:
receive, via the transceiver, a paging message for a terminal from an access and mobility management function, AMF, entity;
identify that the paging message includes information indicating whether the terminal is allowed to access non-closed access group, CAG, cells, wherein the information comprises one from among first information indicating that the terminal is not allowed to access the non-CAG cells and second information indicating that the terminal is allowed to access the non-CAG cells;
when the information comprises the first information, identify, from among at least one CAG cell and at least one non-CAG cell, at least one cell where a paging of the terminal is to be performed as the at least one CAG cell; and
perform the paging of the terminal, via the transceiver, in the identified at least one cell.

5. The base station of claim 4, wherein the at least one processor is further configured to identify, when the information comprises the second information, the at least one cell as the at least one CAG cell or the at least one non-CAG cell.

6. The base station of claim 5, wherein the at least one processor is further configured to perform the paging of the terminal in the identified at least one CAG cell or the at least one non-CAG cell.

## Patentansprüche

1. Verfahren, das von einer Basisstation in einem drahtlosen Kommunikationssystem durchgeführt wird, wobei das Verfahren Folgendes umfasst:
Empfangen (S302) einer Funkrufnachricht für ein Endgerät von einer Zugangs- und Mobilitätsverwaltungsfunktions-, AMF,-Entität;
Identifizieren (S304), dass die Funkrufnachricht Informationen enthält, die anzeigen, ob das Endgerät auf Zellen einer nicht geschlossenen Zugangsgruppe, CAG, zugreifen darf, wobei die Informationen eine von ersten Informationen, die anzeigen, dass das Endgerät nicht auf die Nicht-CAG-Zellen zugreifen darf, und zweiten Informationen, die anzeigen, dass das Endgerät auf die Nicht-CAG-Zellen zugreifen darf, umfassen;
wenn die Informationen die ersten Informationen umfassen, Identifizieren, aus mindestens einer CAG-Zelle und mindestens einer Nicht-CAG-Zelle, mindestens einer Zelle, in der ein Funkruf des Endgeräts durchgeführt werden soll, als die mindestens eine CAG-Zelle; und
Durchführen (S306) des Funkrufs des Endgeräts in der mindestens einen identifizierten CAG-Zelle.

2. Verfahren nach Anspruch 1, ferner umfassend:
Identifizieren der mindestens einen Zelle als die mindestens eine CAG-Zelle oder die mindestens eine Nicht-CAG-Zelle, wenn die Informationen die zweiten Informationen umfassen.

3. Verfahren nach Anspruch 2, ferner umfassend:
Durchführen (S308) des Funkrufs des Endgeräts in der identifizierten mindestens einen CAG-Zelle oder mindestens einen Nicht-CAG-Zelle.

4. Basisstation (200) in einem drahtlosen Kommunikationssystem, wobei die Basisstation Folgendes umfasst:
einen Transceiver (220); und
mindestens einen Prozessor (210, 240), der konfiguriert ist zum:
Empfangen, über den Transceiver, einer Funkrufnachricht für ein Endgerät von einer Zugangs- und Mobilitätsverwaltungsfunktions-, AMF,-Entität;
Identifizieren, dass die Funkrufnachricht Informationen enthält, die anzeigen, ob das Endgerät auf Zellen einer nicht geschlossenen Zugangsgruppe, CAG, zugreifen darf, wobei die Informationen eine von ersten Informationen, die anzeigen, dass das Endgerät nicht auf die Nicht-CAG-Zellen zugreifen darf, und zweiten Informationen, die angeben, dass das Endgerät auf die Nicht-CAG-Zellen zugreifen darf, umfassen;
wenn die Informationen die ersten Informationen umfassen, Identifizieren, aus mindestens einer CAG-Zelle und mindestens einer Nicht-CAG-Zelle, mindestens einer Zelle, in der ein Funkruf des Endgeräts durchgeführt werden soll, als die mindestens eine CAG-Zelle; und
Durchführen des Funkrufs des Endgeräts über den Transceiver in der mindestens einen identifizierten Zelle.

5. Basisstation nach Anspruch 4, wobei der mindestens eine Prozessor ferner so konfiguriert ist, dass er, wenn die Informationen die zweiten Informationen umfassen, die mindestens eine Zelle als die mindestens eine CAG-Zelle oder die mindestens eine Nicht-CAG-Zelle identifiziert.

6. Basisstation nach Anspruch 5, wobei der mindestens eine Prozessor ferner so konfiguriert ist, dass er den Funkruf des Endgeräts in der identifizierten mindestens einen CAG-Zelle oder mindestens einen Nicht-CAG-Zelle durchführt.

## Revendications

1. Procédé exécuté par une station de base dans un système de communication sans fil, le procédé comprenant :
recevoir (S302), de la part d'une entité de fonction de gestion d'accès et de mobilité, AMF, un message de radiomessagerie pour un terminal ;
identifier (S304) que le message de radiomessagerie comprend des informations indiquant si le terminal est autorisé à accéder à des cellules de groupe d'accès non fermé, CAG, les informations comprenant des premières informations indiquant que le terminal n'est pas autorisé à accéder aux cellules non CAG et des deuxièmes informations indiquant que le terminal est autorisé à accéder aux cellules non CAG ;
lorsque les informations comprennent les premières informations, identifier, parmi au moins une cellule CAG et au moins une cellule non CAG, au moins une cellule où une radiomessagerie du terminal doit être effectuée en tant que l'au moins une cellule CAG ; et.
effectuer (S306) la radiomessagerie du terminal dans l'au moins une cellule CAG identifiée.

2. Procédé de la revendication 1, comprenant en outre :
identifier, lorsque les information comprennent les deuxièmes informations, l'au moins une cellule comme étant l'au moins une cellule CAG ou l'au moins une cellule non CAG.

3. Procédé de la revendication 2, comprenant en outre :
effectuer (S308) la radiomessagerie du terminal dans l'au moins une cellule CAG identifiée ou dans l'au moins une cellule non CAG.

4. Station de base (200) dans un système de communication sans fil, la station de base comprenant :
un émetteur-récepteur (220) ; et
au moins un processeur (210, 240) configuré pour :
recevoir, via l'émetteur-récepteur, un message de radiomessagerie pour un terminal de la part d'une entité de fonction de gestion d'accès et de mobilité, AMF ;
identifier que le message de radiomessagerie comprend des informations indiquant si le terminal est autorisé à accéder à des cellules de groupe d'accès non fermé, CAG, les informations comprenant des premières informations indiquant que le terminal n'est pas autorisé à accéder aux cellules non CAG et des deuxièmes informations indiquant que le terminal est autorisé à accéder aux cellules non CAG ;
lorsque les informations comprennent les premières informations, identifier, parmi au moins une cellule CAG et au moins une cellule non CAG, au moins une cellule dans laquelle une radiomessagerie du terminal doit être effectuée en tant qu'au moins une cellule CAG ; et
effectuer la radiomessagerie du terminal, via l'émetteur-récepteur, dans l'au moins une cellule identifiée.

5. Station de base de la revendication 4, dans laquelle l'au moins un processeur est en outre configuré pour identifier, lorsque les 'informations comprennent les deuxièmes information, l'au moins une cellule comme étant l'au moins une cellule CAG ou l'au moins une cellule non CAG.

6. Station de base de la revendication 5, dans laquelle l'au moins un processeur est en outre configuré pour effectuer la radiomessagerie du terminal dans l'au moins une cellule CAG identifiée ou l'au moins une cellule non CAG.
